# EUROPÄISCHE PATENTSCHRIFT

(11) **EP 2 091 700 B1**
(45) Veröffentlichungstag und Bekanntmachung des Hinweises auf die Patenterteilung: **28.02.2024**
(21) Anmeldenummer: 07819107.9
(22) Anmeldetag: 18.10.2007
(51) Int. Cl.: B25J 9/16

(54) **SYSTEM UND VERFAHREN ZUR AUTOMATISIERTEN SCHLEIFEN- UND/ODER POLIEREN VON WERKSTÜCKEN**
SYSTEM AND METHOD FOR AUTOMATED GRINDING AND/OR POLISHING OF WORKPIECES
SYSTÈME ET PROCÉDÉ DE MEULAGE ET/OU DE POLISSAGE AUTOMATISÉ DE PIÈCES

(30) Priorität: 19.10.2006 DE 102006049956
(43) Veröffentlichungstag der Anmeldung: 26.08.2009
(73) Patentinhaber: ABB AG, 2351 Wiener Neudorf (AT)
(72) Erfinder: KOHLMAIER, Martin, 2540 Bad Völsau (AT); KRAPPINGER, Rainer, 2724 Stollhof (AT)
(74) Vertreter: Maiwald GmbH
(86) Internationale Anmeldenummer: PCT/EP2007/009042
(87) Internationale Veröffentlichungsnummer: WO 2008/046619

(56) Entgegenhaltungen:
- EP-A- 0 349 291
- FR-A- 2 619 043
- JP-A- 8 118 278
- JP-A- 63 047 058
- JP-A- 2004 122 255

## Beschreibung

Die Erfindung bezieht sich auf ein System sowie ein Verfahren zum automatisierten Schleifen und/oder Polieren von Werkstücken mittels wenigstens einer Handhabungsvorrichtung, insbesondere eines Roboters. Eine automatisierte Poliervorrichtung bzw. ein Polierverfahren, bei dem eine Kontaktkraft zwischen einem Polierwerkzeug und einem Werkstück erfasst und geregelt wird, ist aus JP 2004 122255 A bekannt.

Roboter übernehmen im Rahmen industrieller Fertigung mehr und mehr Aufgaben und Funktionen. Dabei werden in verstärktem Maße Roboter eingesetzt, um Komponenten an einem vorbestimmten Ort zu positionieren und/oder zusammenzufügen, also zu Montagezwecken, aber auch zunehmend zur Bearbeitung von Werkstücken, wie beispielsweise zum Lackieren, Schleifen, Laserschneiden, Polieren, Bohren, Fräsen, u. dgl., wobei demgemäße Werkzeug-Roboter mit den entsprechenden Bearbeitungswerkzeugen, wie beispielsweise Schweißköpfen, Lackier-Düsen oder Laserschneidvorrichtungen ausgestattet sind. Dabei führen die Roboter mit den gegebenen Achsen vorprogrammierte Bewegungen durch. Um, insbesondere in der Oberflächenbearbeitung, eine zumindest gleichmäßige Bearbeitungsqualität zu erreichen, ist es erforderlich die Anpresskräfte zwischen zu bearbeitendem Werkstück und dem zur Bearbeitung eingesetztem Werkzeug zu stabilisieren und/oder zu kontrollieren. Dazu werden in der Industrie herkömmlich unterschiedliche Systeme eingesetzt. So kann beispielsweise beim Schleifen eines Werkstückes mittels Druckluft ein vorbestimmter Anpressdruck vom Schleifwerkzeug auf das zu schleifende Werkstück beaufschlagt werden, um einen ständigen Kontakt zwischen Werkstück und Werkzeug beim Schleifprozess sicherzustellen und einen Kontaktverlust und damit Einbußen bzw. Einbrüche in der Schleifqualität zu vermeiden. Weitere Systeme umfassen beispielsweise eine mechanische Federung,
eine Federung mittels Gummiklötzen, eine elektromagnetische Federung mit im Wesentlichen vergleichbaren Funktionsweisen und/oder ähnlichen Wirkprinzipien.

Nachteiligerweise erlauben es bekannte Systeme und/oder Verfahren bislang nicht, insbesondere bei der Verwendung von Druckluft, die beaufschlagten Anpresskräfte hinreichend genau und/oder schnell zu regeln und/oder anzupassen, so dass eine vorbestimmbare oder voreinstellbare Bearbeitungskraft beziehungsweise Anpresskraft während des Bearbeitungsprozesses bislang nicht auf einen Konstantwert regelbar ist.

Insbesondere bei Druckluft ist dies zumindest anteilig auf deren Kompressibilität zurückzuführen, da dadurch ein den volumen- und geschwindigkeitskonstanter Luftstrom nicht sichergestellt werden kann. Weitere Einschränkungen erfahren die bekannten Systeme insbesondere auch durch physikalische Gesetzmäßigkeiten in der Prozessbearbeitung. So sind bei Verwendung von Druckluft die erreichbaren Anpresskräfte begrenzt durch die Leistungsfähigkeit der Druckversorgung (Leitungsnetz und Kompressor). Bei Verwendung elektrischer Systeme beispielsweise beim Einsatz von Elektromagneten werden vergleichsweise hohe Ströme und/oder Spannungen benötigt, um die vorhandenen Widerstände zu überwinden und die erforderlichen Feldstärken zu generieren. Auch die elektromagnetische Verträglichkeit der übrigen Prozesskomponenten spielt dabei eine Rolle. Weiterhin werden die beaufschlagbaren Anpresskräfte auch durch die Bauform, Bauart und die spezifischen Materialeigenschaften der eingesetzten Werkzeuge sowie der zu bearbeitenden Werkstücke begrenzt, wobei es lokal zu erheblichen Unterschieden kommen kann, beispielsweise beim Übergang von einem dickwandigen zu einem dünnwandigen Bereich des Werkstückes und/oder bei der Verwendung unterschiedlicher Materialien mit unterschiedlichen spezifischen Eigenschaften, wie beispielsweise der Oberflächenhärte. Auch kann bei einem demgemäß vergleichsweise aufwendigen Prozessaufbau die bauartbedingte Flexibilität der Handhabungsgeräte drastisch eingeschränkt sein, wobei sich bei den Werkzeugen eingeschränkte Ausgleichsmechanismen durch Hubbeschränkungen ergeben können. Dies kann wiederum zur Folge haben, dass eine variierende Maßhaltigkeit der Bauteile nicht durch automatisierte Systeme ausgleichbar ist. Eine weitere Korrektur beziehungsweise Anpassung der beaufschlagten Anpresskräfte kann beispielsweise auch bei einem auftretendem Werkzeugverschleiß erforderlich werden. Auch eine derartige automatisierte Anpassung ist mit bekannten Systemen und Verfahren bislang nicht hinreichend möglich, so dass die zu Grunde liegenden Bearbeitungsprozesse oftmals nur manuell umgesetzt werden können, was letztlich dazu führt, dass naturgegeben Abweichungen und/oder Unterschiede in der Bearbeitung auftreten und jedes bearbeitete Bauteil den Charakter eines Unikates erhält.

Demgemäß liegt der Erfindung die Aufgabe zu Grunde eine verbesserte Möglichkeit zur Erreichung einer reproduzierbaren und/oder gleichmäßigen Bearbeitungsqualität beim automatisierten Schleifen oder Polieren eines Werkstückes, insbesondere auch bei variierenden Umgebungsbedingungen, anzugeben.

Diese Aufgabe wird durch ein System und ein Verfahren zum automatisierten Schleifen und/oder Polieren von Werkstücken mit den im Anspruch 1 bzw. 5 angegebenen Merkmalen gelöst. Vorteilhafte Ausgestaltungen und Weiterbildungen des erfindungsgemäßen Systems und des Verfahrens sind in weiteren Ansprüchen und der nachfolgenden Beschreibung angegeben.

Eine Weiterbildung des Systems sieht wenigstens eine, an einem distalen Ende der Handhabungsvorrichtung angeordnete Haltevorrichtung zur Aufnahme wenigstens eines Werkzeugs oder wenigstens eines Werkstücks vor.

Als wenigstens eines Werkzeug sind dabei ein Schleif- und/oder Polierwerkzeug einsetzbar.

Als wenigstens eines Werkstück sind dabei insbesondere zu polierende und/oder zu schleifende Gehäuseelemente, beispielsweise Kameragehäuseteile, einsetzbar. Die Gehäuseelemente können beispielhaft aus Magnesium oder Aluminium oder einer Kombination daraus gebildet sein.

In einer Ausgestaltung des Systems ist wenigstens eine Messanordnung zur Kraft- und/oder Momentenbestimmung und/oder Kraft- und/oder Momentendifferenzbestimmung vorgesehen, wobei als Regelgröße, die in wenigstens einer vorbestimmbaren Richtung zwischen eingesetztem Werkzeug und jeweiligem Werkstück wirkenden Kräfte und/oder Momente berücksichtigt und/oder verwertet sind.

Systemgemäß ist weiterhin vorsehbar, dass die durch vorgenannte Messanordnung qualitativ erfassten Messwerte über wenigstens eine Schnittstelle zur Kommunikation und zum Datenaustausch an die Regelkomponente übermittelbar sind.

Die Schnittstelle kann drahtgebunden, beispielsweise eine USB-, Ethernet-, RS-232, Fire-Wire-, SCSI- oder eine andere LAN-Schnittstelle oder drahtlos, beispielsweise eine Bluetooth-, Infrarot-, eine Funkstrecke oder eine andere WLAN-Schnittstelle sein.

Vorteilhaft ist weiterhin vorsehbar, dass die wenigstens eine Richtung frei im Raum eines statischen und/oder eines bewegten Bezugssystem oder Koordinatensystems definierbar ist, was eine optimierte Bahnkorrektur und resultierend einen optimalen Einsatz eines jeweiligen Werkzeugs bei der Bearbeitung des jeweiligen Werkstückes, auch bei einer Vielzahl von Bearbeitungsprozessen und/oder auch bei veränderlichen Umgebungsparametern, ermöglicht.

In vorteilhafter Ausgestaltung des Systems ist durch die Regeleinrichtung eine Interpretation und Verarbeitung der übermittelten Messwerte der jeweiligen Regelgröße bewirkt und/oder resultierend eine jeweilige Bewegungs- beziehungsweise Bahnkorrektur und/oder entsprechenden Bahnkorrekturwert der Handhabungsvorrichtung ermittelt und/oder eine entsprechende Bahn- und/oder Positionsoptimierung bewirkt.

Insbesondere bewirkt die wenigstens eine Regeleinrichtung im Zusammenwirken mit der Steuerungseinrichtung und der wenigstens einen Messanordnung, dass die entlang wenigstens einer vorbestimmbaren Richtung wirkende Kraft und/oder das entlang wenigstens einer Richtung wirkende Moment auf wenigstens einen vorbestimmten Referenzwert geregelt ist und/oder konstant gehalten ist.

In einer vorteilhaften Weiterbildung des Systems ist die Messwerterfassung und/oder -verarbeitung durch die Messanordnung im Zusammenwirken mit der Regeleinrichtung zyklisch oder kontinuierlich bewirkt, wobei dann auch die resultierende Bahn- und/oder Positionskorrektur beziehungsweise Bahn- und/oder Positionsoptimierung zyklisch oder kontinuierlich bewirkt ist.

Vorteilhaft ist die wenigstens eine Handhabungsvorrichtung dabei ein- oder mehrachsig, insbesondere sechsachsig ausgebildet, so dass sechs mögliche Rotationsfreiheitsgrade bestehen.

In vorteilhafter Weiterbildung des Systems ist die wenigstens eine Regeleinrichtung in die Steuerungseinrichtung integriert und Bestandteil derselben.

In einer weiteren Ausgestaltung ist die Regeleinrichtung modular ausgebildet und/oder in die Steuerungseinrichtung integrierbar.

Insbesondere verfügen Steuerungseinrichtung und/oder Regeleinrichtung und/oder Messanordnung über jeweils wenigstens eine Schnittstelle zur drahtgebundenen und/oder drahtlosen Kommunikation und/oder zum Datenaustausch.

Dabei kann es sich beispielsweise um Hardwareschnittstellen zwischen physikalischen Systemen, wie PCI-Bus, SCSI, USB, Firewire oder auch RS-232 handeln, und/oder um Datenschnittstellen zur Interprozesskommunikation (IPC), insbesondere über ein Netzwerk hinweg, wie Remote Procedure Call, DCOM, RMI oder CORBA aber auch ODBC und JDBC, handeln. Auch die bekannten Netzwerkprotokolle wie TCP, HTTP, usw. können als IPC-Schnittstellen verstanden werden.

Auch gängige Industrie- und/oder Feldbussysteme sowie deren Schnittstellen sind zum Datenaustausch und/oder zur Datenkommunikation vorteilhaft einsetzbar. Hierzu zählen beispielsweise auch CAN-BUS, Profibus, Feldbus, MOST-Bus, LIN-Bus, EIB, KNX oder auch FlexRay.

In einer weiteren Ausgestaltung umfasst die Messanordnung wenigstens einen auf einem der nachfolgend genannten Prinzipien/Arten beruhenden Kraft- und/oder Momentensensor:
- Piezoelektrischer Sensor, bei einem piezoelektrischen Sensor wird mittels Druck, also Kraft pro Fläche, in einem Kristall eine elektrische Spannung hervorgerufen, wobei im Kristall elektrische Ladungen getrennt werden (piezoelektrischer Effekt). Die elektrische Spannung ändert sich dabei in einem vorbestimmten Bereich proportional zur Kraft. Dieser Effekt funktioniert auch umgekehrt, so dass es bei Anlegen einer elektrischen Spannung an den piezoelektrischen Sensor zu einer Verformung desselben kommt. Piezoelektrische Sensoren bieten darüber hinaus etliche Vorteile, beispielsweise deren Unempfindlichkeit gegenüber hohen Temperaturen, es ist keine äußere Spannungversorgung erforderlich und deren Wirkungsgrad ist vergleichsweise hoch.
- Kraftaufnehmer, beim Einsatz von Kraftaufnehmern wird aufgrund von Krafteinwirkung ein Federelement elastisch verformt, wobei die Kraftaufnahme in vorgeschriebener Richtung zu erfolgen hat. Die durch Krafteinwirkung hervorgerufene Verformung des Federkörpers, in aller Regel Metall, wird über Dehnungsmessstreifen in elektrische Spannung umgewandelt. Dann wird beispielsweise über einen entsprechend vorsehbaren Messverstärker die durch Krafteinwirkung hervorgerufene elektrische Spannung und damit die Dehnungsänderung registriert und/oder kann aufgrund der elastischen Eigenschaften des Federkörpers in einen Kraftmesswert umgerechnet werden.
- Differenzdruckmesser, bei welchem die Differenz zweier Absolutdrücke, der so genannte Differenzdruck, gemessen wird. Der Differenzdrucksensor kann dabei zwei Messkammern aufweisen, die durch eine Membran hermetisch voneinander getrennt sind. Die messbare Auslenkung der Membran ist dann ein Maß für die Größe des Differenzdruckes. Die Kammern können dabei mit Flüssigkeit, insbesondere auch mit einem Gel entsprechender Viskosität gefüllt sein.

In vorteilhafter Ausgestaltung ist wenigstens eine Messanordnung zur Kraft- und/oder Momentenbestimmung beziehungsweise Kraft- und/oder Momentendifferenzbestimmung im Bereich wenigstens einer der Achsen beziehungsweise Drehachsen der Handhabungsvorrichtung angeordnet.

Systemgemäß ist weiterhin vorsehbar, dass wenigstens eine Messanordnung als Teil der Kinematik der Handhabungsvorrichtung ausgebildet ist.

In Weiterbildung des Systems ist die Handhabungsvorrichtung als Roboter, insbesondere als industriell einsetzbarer Roboter, mit wenigstens einer Drehachse, insbesondere jedoch sechs Drehachsen ausgestaltet.

Eine Ausgestaltung des Systems sieht vor, dass die Handhabungsvorrichtung das jeweilige Werkzeug relativ zum Werkstück gemäß einer vorbestimmten Bahn bewegt.

Alternativ kann auch vorgesehen sein, dass die Handhabungsvorrichtung das jeweilige Werkstück relativ zum Werkzeug gemäß einer vorbestimmten Bahn bewegt.

Weiterhin ist vorsehbar, dass die Messanordnung eine Kraft- und/oder Momentenbestimmung beziehungsweise Kraft- und/oder Momentendifferenzbestimmung in einer oder mehreren Achsen, insbesondere sechs Achsen, und/oder einer Resultierenden aus mehreren Achsen der Handhabungsvorrichtung ermöglicht.

Eine Weiterbildung des Systems sieht vor, dass die Haltevorrichtung eine Schleif- und/oder Poliermaschine und/oder einen Fräser und/oder ein Entgratungswerkzeug aufweist.

Vorteilhaft ist vorsehbar, dass in der Regeleinrichtung auch komplexe Formgebungen und/oder Materialübergänge und/oder unterschiedliche Materialien der Werkstücke berücksichtigt beziehungsweise berücksichtigbar und/oder umsetzbar sind.

In vorteilhafter Ausbildung des Systems sind weitere Messanordnungen zur Erfassung weiterer physikalischer Größen beispielsweise von Werkzeug, Werkstück und/oder Handhabungsvorrichtung vorgesehen.

Insbesondere ist vorsehbar, dass die Regeleinrichtung Prozessgrößen mittelbar und/oder unmittelbar beeinflusst.

Eine weitere Ausbildung des Systems sieht vor, dass eine Vielzahl von Messanordnung unterschiedlicher Form, Funktion und Bauart, wie Beispielsweise Kraftsensoren, Drucksensoren, Abstandsmesser, Bewegungsmesser, Geschwindigkeitssensoren, Lagesensoren, Leitfähigkeitsmesser, optische Sensoren und Messfühler, insbesondere für Temperatur und/oder Luftfeuchtigkeit, im Zusammenwirken oder getrennt voneinander zur Messwerterfassung und/oder Messsignalbildung eingesetzt sind.

In vorteilhafter Ausgestaltung berücksichtigt die Regeleinrichtung auch den Einsatz der den jeweiligen Bearbeitungsprozess unterstützenden Zusatzmittel, wie beispielsweise den Einsatz unterschiedlicher Schleifpasten beim Schleifen und/oder Polieren, unterschiedlichen Körnungen beim Schleifen und/oder Polieren und/oder Sandstrahlen, durch geeignete Parameterwahl, wobei beispielsweise jedem Zusatzmittel wenigstens ein entsprechender Prozessparameter, beispielsweise ein spezifischer Referenzwert der Regelgröße, insbesondere die Aufpresskraft des Schleifers auf das Werkstück, aber beispielsweise auch die Bearbeitungsgeschwindigkeit beziehungsweise Geschwindigkeit der Handhabungsvorrichtung, zugewiesen ist.

In Weiterbildung des Systems sind die erfassten Messwerte der Messanordnung zur absoluten oder relativen Kalibrierung der Handhabungsvorrichtung eingesetzt.

Vorteilhaft sind systemgemäß ein oder mehrere Bearbeitungsschritte, auch mit unterschiedlichen Werkzeugen und/oder Umgebungsbedingungen beziehungsweise - Parametern möglich, wobei vorteilhaft vorsehbar ist, dass der Werkzeug- und/oder Parameterwechsel und/oder die parameterspezifische Referenzwertanpassung automatisch durchgeführt sind.

Weiterhin ist vorteilhaft vorsehbar, dass unterschiedliche Orientierungen des jeweiligen Bearbeitungs- beziehungsweise Verarbeitungswerkzeuges, beispielsweise ein erforderliches schräges Aufsetzen des Schleifers auf das jeweilige Werkstück, wodurch ein Winkel zwischen Oberflächennormalen des Werkstückes und der Drehachse des Schleifers gebildet ist, berücksichtigbar sind und/oder keinen Einfluss auf die Funktionsweise der Messanordnung und/oder der Regeleinrichtung haben.

In vorteilhafter Ausgestaltung des Systems ist die Funktionsweise der Messanordnung und/oder der Regeleinrichtung unabhängig von der Relativbewegung und/oder Relativgeschwindigkeit zwischen Werkzeug und Werkstück.

Vorteilhaft ist durch den Einsatz von Messanordnung und/oder Regeleinrichtung sowie den Optimierungsprozess die Funktionsweise und Flexibilität der Handhabungsvorrichtung und/oder etwaiger Zuführungen nicht beeinträchtigt.

Vorgenanntes System ermöglicht durch Berücksichtigung einer messbaren Regelgröße damit eine reproduzierbare und/oder gleichmäßige Bearbeitungsqualität, insbesondere bei der Oberflächenbearbeitung, auch bei sich ändernden Umgebungsparametern, beispielsweise bei unterschiedlichen Schleif- und/oder Poliervorgängen verschiedene Schleifpasten und damit einhergehend unterschiedliche Auflagekräfte, zu erreichen.

Vorteilhaft ist weiterhin vorsehbar, dass die wenigstens eine Richtung frei im Raum eines statischen und/oder eines bewegten Bezugssystem oder Koordinatensystems definiert werden kann, wodurch eine optimierte Bahnkorrektur und resultierend einen optimalen Einsatz eines jeweiligen Werkzeugs bei der Bearbeitung des jeweiligen Werkstückes, auch bei einer Vielzahl verschiedenartiger Bearbeitungsprozesse und/oder auch bei veränderlichen Umgebungsbedingungen beziehungsweise -Parametern, ermöglicht wird.

Verfahrensgemäß ist weiterhin vorsehbar, dass durch vorgenannte Messanordnung, insbesondere qualitativ, die entlang wenigstens einer frei vorgebbaren Richtung und/oder wenigstens einer Achse zwischen Werkzeug und Werkstück auftretenden beziehungsweise wirkenden Kräfte und/oder Momente absolut erfasst werden und/oder die erfassten Messwerte, beispielsweise über wenigstens eine vorsehbare Schnittstelle zur Kommunikation und zum Datenaustausch, an die Regeleinrichtung übermittelt werden.

In einer weiteren Ausprägung des Verfahrens ist vorteilhaft vorsehbar, dass entlang wenigstens einer Achse und/oder wenigstens einer vorgebbaren Richtung auftretende Kräfte und/oder Momente beziehungsweise Kraft- und/oder Momentenabweichungen relativ zu wenigstens einem vorbestimmten Referenzwert erfasst und/oder die über wenigstens eine vorsehbare Schnittstelle, insbesondere drahtgebunden, wie beispielsweise mittels USB, Ethernet, RS-232, Fire-Wire, SCSI oder ein anderes LAN oder drahtlos, wie beispielsweise mittels Bluetooth, Infrarot, Funkstrecke oder ein anderes WLAN zur Kommunikation und zum Datenaustausch, an die Regeleinrichtung übermittelt werden.

In vorteilhafter Ausgestaltung des Verfahrens wird mittels der wenigstens einen Regeleinrichtung eine Interpretation und Verarbeitung der übermittelten Messwerte der jeweiligen Regelgröße durchgeführt und/oder resultierend eine jeweilige Bewegungsbeziehungsweise Bahnkorrektur und/oder entsprechenden Bahnkorrekturwert der Handhabungsvorrichtung ermittelt und/oder eine entsprechende Bahn- und/oder Positionsoptimierung bewirkt.

Insbesondere wird die entlang wenigstens einer vorbestimmbaren Richtung wirkende Kraft und/oder das entlang wenigstens einer Richtung wirkende Moment auf wenigstens einen vorbestimmten Referenzwert geregelt.

Eine weitere Ausführung des Verfahrens sieht vor, dass in Abhängigkeit eines oder mehrerer vorgebbarer Parameter, wie beispielsweise der aktuellen Position des Werkzeuges oder des Werkstückes, der Art des verwendeten Werkzeuges, der Art des jeweiligen Be- oder Verarbeitungsprozesses ein jeweilig geeigneter Referenzwert aus einem vorbestimmbaren Satz von Referenzwerten, welche insbesondere auf einem Datenspeicher aufrufbar ablegbar sind, selektiert wird.

In einer vorteilhaften Weiterführung des Verfahrens wird die Messwerterfassung und/oder -Verarbeitung zyklisch oder kontinuierlich durchgeführt, wobei dann auch die resultierende Bahn- und/oder Positionskorrektur beziehungsweise Bahn- und/oder Positionsoptimierung zyklisch oder kontinuierlich durchgeführt wird.

Vorteilhaft können verfahrensgemäß insbesondere sechs mögliche Rotationsfreiheitsgrade der Handhabungsvorrichtung berücksichtigt werden.

In vorteilhafter Weiterbildung des Verfahrens kann die Kommunikation und/oder der Datenaustausch, insbesondere bei Übermittlung der erfassten Messwerte und/oder der Position- und/oder Bahnkorrekturwerte jeweils drahtgebunden oder drahtlos mittels geeigneter Schnittstellen erfolgen.

Dabei kann es sich beispielsweise um Hardwareschnittstellen zwischen physikalischen Systemen, wie PCI-Bus, SCSI, USB, Firewire oder auch RS-232 handeln, und/oder Datenschnittstellen zur Interprozesskommunikation (IPC), insbesondere über ein Netzwerk hinweg wie Remote Procedure Call, DCOM, RMI oder CORBA aber auch ODBC und JDBC, handeln. Auch die bekannten Netzwerkprotokolle wie TCP, HTTP, usw. können als IPC-Schnittstellen verstanden werden.

Auch gängige Industrie- und/oder Feldbussysteme sowie deren Schnittstellen sind zum Datenaustausch und/oder zur Datenkommunikation vorteilhaft einsetzbar. Hierzu zählen beispielsweise auch CAN-BUS, Profibus, Feldbus, MOST-Bus, LIN-Bus, EIB, KNX oder auch FlexRay.

In einer weiteren Ausgestaltung wird verfahrensgemäß wenigstens ein piezoelektrischer Sensor und/oder ein Kraftaufnehmer und/oder ein Differenzdruckmesser als Kraft- und/oder Momentensensor eingesetzt.

Verfahrensgemäß ist weiterhin vorsehbar, dass mittels der wenigstens einen Handhabungsvorrichtung das jeweilige Ver- beziehungsweise Bearbeitungswerkzeug relativ zum Werkstück gemäß einer vorbestimmten, insbesondere programmierten Bahn bewegt wird oder alternativ das jeweilige Werkstück relativ zum Werkzeug gemäß einer vorbestimmten, insbesondere programmierten Bahn bewegt wird.

Eine Ausführungsvariante sieht vor, dass mittels Messanordnung eine Kraft- und/oder Momentenbestimmung beziehungsweise Kraft- und/oder Momentendifferenzbestimmung in einer oder mehreren Achsen, insbesondere sechs Achsen, und/oder einer aus mehreren Achsen Resultierenden der Handhabungsvorrichtung durchgeführt wird.

Vorteilhaft ist vorsehbar, dass auch komplexe Formgebungen und/oder Materialübergänge und/oder unterschiedliche Materialien der Werkstücke verfahrensgemäß berücksichtigt werden.

Auch ist weiterhin vorsehbar, dass weitere physikalische und/oder prozessrelevante Größen, insbesondere von Werkzeug, Werkstück und/oder Handhabungsvorrichtung, erfasst werden.

Eine Ausführungsvariante sieht vor, dass mehrere Messanordnungen unterschiedlicher Form, Funktion und/oder Bauart, wie Beispielsweise Kraftsensoren, Drucksensoren, Abstandsmesser, Bewegungsmesser, Geschwindigkeitssensoren, Lagesensoren, Leitfähigkeitsmesser, optische Sensoren und Messfühler, insbesondere für Temperatur und/oder Luftfeuchtigkeit, im Zusammenwirken oder getrennt voneinander zur Erfassung einer oder mehrerer Regelgrößen sowie der jeweiligen Messwerte und/oder dem sich daraus ergebenden Messsignal eingesetzt werden.

In vorteilhafter Ausprägung des Verfahrens wird auch ein Einsatz den jeweiligen Parameterwahl berücksichtigt, wobei beispielsweise jedem den Bearbeitungsprozess unterstützenden Zusatzmittel, wie beispielsweise unterschiedliche Schleifpasten beim Schleifen und/oder Polieren, unterschiedliche Körnungen beim Schleifen und/oder Polieren und/oder Sandstrahlen, durch geeignete Verknüpfung kenngrößenspezifisch und/oder parameterspezifisch wenigstens ein weiterer Prozessparameter, beispielsweise ein spezifischer Referenzwert der jeweiligen Regelgröße, insbesondere die Aufpresskraft des Schleifers auf das Werkstück, aber beispielsweise auch die Bearbeitungsgeschwindigkeit beziehungsweise Geschwindigkeit der Handhabungsvorrichtung, zugewiesen wird.

In Weiterbildung des Verfahrens werden die erfassten Messwerte der Messanordnung auch zur Kalibrierung der Handhabungsvorrichtung eingesetzt.

Vorteilhaft können verfahrensgemäß auch ein oder mehrere Bearbeitungsschritte, auch mit unterschiedlichen Werkzeugen und/oder bei unterschiedlichen Umgebungsbedingungen beziehungsweise -Parametern durchlaufen werden, wobei vorteilhaft vorsehbar ist, dass ein Werkzeug- und/oder Parameterwechsel und/oder eine parameterspezifische Referenzwertanpassung automatisiert durchgeführt wird.

Weiterhin ist vorteilhaft vorsehbar, dass unterschiedliche Orientierungen des jeweiligen Bearbeitungs- beziehungsweise Verarbeitungswerkzeuges, beispielsweise ein erforderliches schräges Aufsetzen der Schleifers auf das jeweilige Werkstück, wodurch ein Winkel zwischen Oberflächennormalen des Werkstückes und der Drehachse des Schleifers gebildet ist, berücksichtigt werden können und/oder keinen Einfluss auf den Verfahrensablauf beziehungsweise die Durchführung des Verfahrens haben.

Eine Ausführungsvariante sieht vor, dass eine Selektion der Bahnoptimierungsart, beziehungsweise der ihr zu Grunde liegenden Prozessparameter, programmgesteuert anhand wenigstens einer vorbestimmbaren Kenngröße durchgeführt wird.

Eine Ausgestaltung des Verfahrens sieht weiterhin vor, dass in Abhängigkeit eines oder mehrerer vorgebbarer Kenngrößen, wie beispielsweise der aktuellen Position des Werkzeuges oder des Werkstückes, der Art des verwendeten Werkzeuges, der Art des jeweiligen Be- oder Verarbeitungsprozesses ein jeweilig geeigneter Referenzwert aus einem vorbestimmbaren Satz von Referenzwerten, welche insbesondere auf einem Datenspeicher aufrufbar abgelegt sein können, selektiert wird.

Weiterhin ist vorteilhaft vorsehbar, dass das Schleifen oder Polieren des wenigstens einen Werkstückes mittels wenigstens einer ein- oder mehrachsigen Handhabungsvorrichtung durchgeführt wird.

In einer weiteren Ausgestaltung des Verfahrens wird wenigstens ein Messsignal beziehungsweise werden die in wenigstens einer Richtung erfassten Kraft- und/oder Momentenmesswerte als Absolutwerte ausgegeben und/oder weitergeleitet.

Verfahrensgemäß ist vorteilhaft vorsehbar, dass die Bewegungsbahn der Handhabungsvorrichtung ausgehend vom Messsignal beziehungsweise den erfassten Messwerten zwischen zwei frei vorgebbaren Positionen anwendungsspezifisch optimiert wird.

Eine weitere Ausprägung des Verfahrens sieht vor, dass durch das Resultat der Messung beziehungsweise die Auswertung und/oder Interpretation der Messwerte eine flexible Änderung des Bewegungsablauf beziehungsweise des Prozessablaufs und/oder des zu Grunde liegenden Programms bewirkt wird.

Vorteilhaft ist weiter vorsehbar, dass ein- oder mehrdimensionale Größen und/oder Messwerte und/oder Korrekturwerte ermittelt werden.

Vorteilhaft ist das Verfahren universell anwendbar und/oder weitgehend unabhängig von. Art und/oder Form und/oder Beschaffenheit des jeweiligen Werkstückes und/oder des jeweiligen Werkzeuges.

Die weitere Darlegung der Erfindung sowie vorteilhafter Ausgestaltungen erfolgt anhand von einigen Figuren und Ausführungsbeispielen.

Es zeigen:

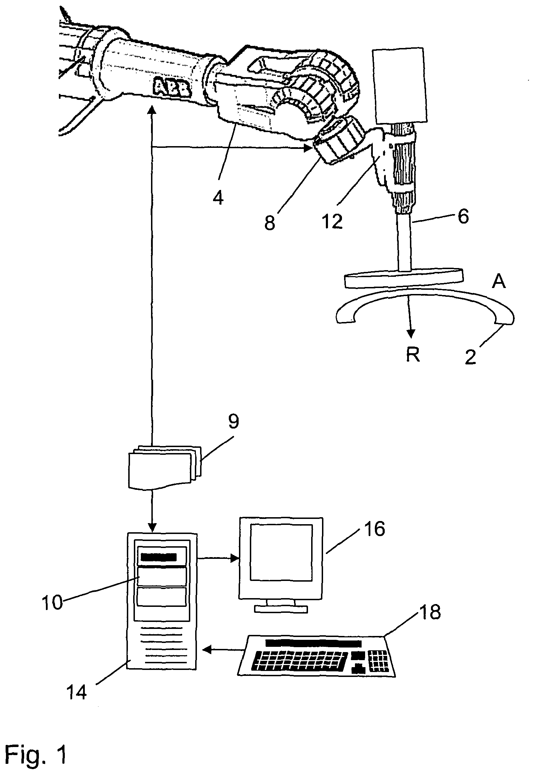

- Figur 1: ein beispielhaft ausgebildetes System zur automatisierten Schleifen und/oder Polieren von Werkstücken

In Fig. 1 ist ein beispielhaft ausgestaltetes System zum Schleifen und/oder Polieren von Werkstücken gezeigt. Als Handhabungsvorrichtung 4 ist ein mehrachsiger Roboter oder Industrieroboter, insbesondere ein sechs Achsen aufweisender Roboter, mit wenigstens einer Messanordnung 8 mit wenigstens einem Kraftsensor zur Erfassung wenigstens einer Regelgröße 9 vorgesehen.

Am distalen Ende des Roboters 4 ist eine Haltevorrichtung 12 zur Aufnahme wenigstens eines Werkzeugs 6, im hier gezeigten Beispiel eines Schleifers beziehungsweise einer Schleifmaschine 6 vorgesehen. Die Haltevorrichtung 12 kann dabei beispielsweise einen Flansch und/oder Greifer und/oder Wechselmagazin für Werkzeuge aufweisen.

Grundsätzlich können jedoch auch weitere Verarbeitungswerkzeuge, wie insbesondere ein Polier- und/oder Fräs- und/oder Entgratungswerkzeuge und/oder Schweißgeräte eingesetzt sein.

Weiterhin ist eine Regeleinrichtung 10 vorgesehen, welche mit der Messanordnung 8 zusammenwirkt und unter Berücksichtigung der wenigstens einen Regelgröße 9 eine Optimierung des jeweiligen Schleif- und/oder Polierprozesses bewirkt, indem eine regelgrößenabhängige Korrektur eines vorgegebenen Bewegungsablaufs und damit eine Bahn- und/oder Positionskorrektur des Roboters 4 beziehungsweise des Werkzeugs 6 relativ zum Werkstück 2 durchgeführt und/oder bewirkt wird.

Als Werkstück 2 ist beispielhaft ein zu polierendes Gehäuseelement, insbesondere ein Kameragehäuseteil, angegeben. Die Gehäuseelemente können beispielhaft aus Magnesium oder Aluminium oder Kunststoff oder einer Kombination daraus gebildet sein.

Die Messanordnung 8 zur Kraft- und/oder Momentenbestimmung und/oder Kraft- und/oder Momentendifferenzbestimmung erfasst dabei als Regelgröße 9, die in wenigstens einer vorbestimmbaren Richtung R zwischen eingesetztem Werkzeug 6 und dem jeweiligem Werkstück 2 wirkende Auflage- und/oder Anpresskraft.

Weiterhin ist eine Steuerungseinrichtung 14 mit Anzeige- 16 und Eingabeeinrichtung 18 zur Positions- und/oder Bewegungssteuerung des Roboters 4 vorgesehen, welche mit der Regeleinrichtung 10 derart zusammenwirkt, dass der Steuerungseinrichtung 14 einer jeweilig durchgeführten Positions- und/oder Bahnoptimierung entsprechende Steuerkorrekturwerte, insbesondere Bewegungs- und/oder Positionskorrekturwerte, bezüglich eines vorgegebenen Bewegungsablaufs und/oder Bahnverlaufs übermittelt und durch diese automatisiert umgesetzt werden. Diese Korrekturwerte sind dabei derart bemessen, dass eine Abweichung des jeweilig erfassten Regelgrößenmesswertes von einem vorbestimmbaren Referenzwert kompensiert wird, das heißt die jeweilige Regelgröße auf einen vorbestimmbaren Referenzwert geregelt wird.

Dabei können parameterabhängig, insbesondere in Abhängigkeit der Position des Werkzeugs und/oder der jeweiligen Materialbeschaffenheit des Werkstücks und/oder des jeweiligen Bearbeitungsschrittes, auch mehrere unterschiedliche beziehungsweise differierende Referenzwerte zum Einsatz kommen. Insbesondere kommen abhängig von den eingesetzten Zusatzmitteln, beispielsweise verschiedener Schleif- und/oder Polierpasten, unterschiedliche Referenzwerte zum Einsatz.

Vorteilhaft können somit auch unterschiedliche Bearbeitungsschritte und/oder-phasen durchgeführt werden.

Aufgrund des hohen Automatisierungsgrades und der Regelung der Auflagekraft des Werkzeuges auf dem Werkstück ist reproduzierbar eine vergleichsweise hohe Bearbeitungs- und/oder Prozessqualität insbesondere Schleif- und/oder Polierqualität des Systems sowie des Verfahrens gegeben und erreicht.

Es wird darauf hingewiesen, dass die Beschreibungsteile von Seite 4, zweiter Absatz bis Seite 10, erster Absatz, Seite 10, vierter Absatz bis Seite 11, zweiter Absatz, Seite 12, zweiter Absatz, dritter Absatz, Seite 12, fünfter Absatz bis Seite 14, vorletzter Absatz nicht Teil der Gegenstand des Anspruchssatzes der Erfindung sind.

## Patentansprüche

1. System zum automatisierten Schleifen und/oder Polieren von Werkstücken (2) unter Einsatz von unterstützenden Zusatzmitteln, welches aufweist:
wenigstens eine Handhabungsvorrichtung (4), insbesondere einen Roboter oder Industrieroboter, mit wenigstens einer Messanordnung (8) zur Erfassung wenigstens einer Regelgröße (9),
wenigstens eine Regeleinrichtung (10), welche mit wenigstens der Messanordnung (8) zusammenwirkt und unter Berücksichtigung der wenigstens einen Regelgröße eine Optimierung des jeweiligen Schleif- oder Polierprozesses bewirkt, wobei
entlang wenigstens einer Achse und/oder wenigstens einer vorgebbaren Richtung auftretende Kräfte und/oder Momente und/oder Kraft- und/oder Momentenabweichungen relativ zu wenigstens einem vorbestimmten Referenzwert erfassbar sind, und die Optimierung des jeweiligen Schleif- oder Polierprozesses durch Korrektur eines vorgegebenen Bewegungsablaufs und damit durch eine Bahn- und Positionskorrektur der Handhabungsvorrichtung (4) bewirkt ist, und
wenigstens eine Steuerungseinrichtung (14) zur Positions- und Bewegungssteuerung der Handhabungsvorrichtung (4), die mit der wenigstens einen Regeleinrichtung (10) derart zusammenwirkt, dass der Steuerungseinrichtung (14) einer jeweilig durchgeführten Positions- oder Bahnoptimierung entsprechende Steuerkorrekturwerte, insbesondere Bewegungs- oder Positionskorrekturwerte, bezüglich eines vorgegebenen Bewegungsablaufs oder Bahnverlaufs zur Umsetzung übermittelt beziehungsweise übermittelbar sind und die
wenigstens eine Regeleinrichtung (10) im Zusammenwirken mit der Steuerungseinrichtung (14) und der wenigstens einen Messanordnung (8), die entlang wenigstens einer vorbestimmbaren Richtung wirkende Kraft oder das entlang wenigstens einer Richtung wirkende Moment auf wenigstens einen vorbestimmten Referenzwert regelt, wobei
mittels der Regeleinrichtung in Abhängigkeit vorgebbarer Parameter, die die aktuelle Position des Werkzeuges und des Werkstückesumfassen, ein jeweilig geeigneter Referenzwert aus einem vorbestimmbaren Satz von Referenzwerten, welche insbesondere auf einem Datenspeicher aufrufbar abgelegt sind, selektiert ist, **dadurch gekennzeichnet, dass** jedem Zusatzmittel ein spezifischer Referenzwert der Regelgröße zugewiesen ist

2. System nach einem der Anspruch 1, **dadurch gekennzeichnet, dass** an einem distalen Ende der Handhabungsvorrichtung (4) eine Haltevorrichtung (12) zur Aufnahme wenigstens eines Werkzeugs (6) oder wenigstens eines Werkstücks (2) vorgesehen ist.

3. System nach einem der vorherigen Ansprüche, **dadurch gekennzeichnet, dass** als von der Messanordnung (8) erfasste Regelgröße (9) die in wenigstens einer vorbestimmbaren Richtung zwischen eingesetztem Werkzeug (6) und jeweiligem Werkstück (2) wirkenden Kräfte und Momente, insbesondere Auflage- und/oder Anpresskräfte, berücksichtigt und verwertet sind.

4. System nach einem der vorherigen Ansprüche, **dadurch gekennzeichnet, dass** jeweils wenigstens eine Schnittstelle zur drahtgebundenen oder drahtlosen Kommunikation und zum Datenaustausch zwischen Regeleinrichtung (10) und/oder Messanordnung (8) und/oder Steuerungseinrichtung ( 14) vorgesehen ist.

5. Verfahren zum automatisierten Schleifen und/oder Polieren von Werkstücken unter Einsatz von unterstützenden Zusatzmitteln, **dadurch gekennzeichnet, dass**
mittels wenigstens einer Messanordnung (8) einer Handhabungsvorrichtung (4) wenigstens eine Regelgröße (9) erfasst wird und mittels wenigstens einer Regeleinrichtung (10) unter Berücksichtigung der wenigstens einen Regelgröße eine Optimierung des jeweiligen Schleif- oder Polierprozesses durchgeführt wird, wobei
die Optimierung des jeweiligen Schleif- oder Polierprozesses bewirkt wird, indem basierend auf der ermittelten Regelgröße (9) eine Korrektur eines vorgegebenen, insbesondere programmierten, Bewegungsablaufs und damit eine Bahn- und Positionskorrektur der Handhabungsvorrichtung (4) durchgeführt wird,
wobei anhand der erfassten Regelgrößenmesswerte entsprechende Steuerkorrekturwerte, insbesondere Bewegungs- und/oder Positionskorrekturwerte, ermittelt und zur Durchführung einer entsprechenden Positions- und/oder Bahnoptimierung zur Umsetzung an eine Steuerungseinrichtung (14) der Handhabungsvorrichtung (4) übermittelt werden und die entlang wenigstens einer vorbestimmbaren Richtung wirkende Kraft oder das entlang wenigstens einer Richtung wirkende Moment auf wenigstens einen vorbestimmten Referenzwert geregelt wird, wobei
abhängig von der aktuellen Position des Werkzeuges und des Werkstückes ein jeweilig geeigneter Referenzwert aus einem vorbestimmbaren Satz von Referenzwerten selektiert und dem Optimierungsprozess zugrunde gelegt wird, wobei jedem Zusatzmittel ein spezifischer Referenzwert der Regelgröße zugewiesen ist.

6. Verfahren nach Anspruch 5, **dadurch gekennzeichnet, dass** mittels wenigstens einer Messanordnung (8) eine Kraft- und Momentenbestimmung oder Kraft- und Momentendifferenzbestimmung durchgeführt wird, wobei als Regelgröße (9), die in wenigstens einer vorbestimmbaren Richtung zwischen jeweilig eingesetztem Werkzeug (6) und jeweiligem Werkstück (2) wirkenden Kräfte und/oder Momente berücksichtigt werden.

7. Verfahren nach einem der Ansprüche 5 bis 6, **dadurch gekennzeichnet, dass** mittels Messanordnung (8) qualitativ die entlang wenigstens einer frei vorgebbaren Richtung und/oder wenigstens einer Achse zwischen Werkzeug (6) und Werkstück (2)auftretenden und wirkenden Kräfte oder Momente absolut erfasst werden.

8. Verfahren nach einem der Ansprüche 5 bis 7, **dadurch gekennzeichnet, dass** erfasste Regelgrößenmesswerte an die Regeleinrichtung (10) übermittelt werden.

9. Verfahren nach einem der Ansprüche 5 bis 8, **dadurch gekennzeichnet, dass** sechs mögliche Rotationsfreiheitsgrade der Handhabungsvorrichtung (4) berücksichtigt und verwertet werden.

10. Verfahren nach einem der Ansprüche 5 bis 9, **dadurch gekennzeichnet, dass** in wenigstens einer Messanordnung (8) wenigstens ein piezoelektrischer Sensor oder ein Kraftaufnehmer oder ein Differenzdruckmesser als Kraft- und Momentensensor eingesetzt wird.

11. Verfahren nach einem der Ansprüche 5 bis 10, **dadurch gekennzeichnet, dass** auch komplexe Formgebungen und Materialübergänge und/oder unterschiedliche Materialien der Werkstücke (2) berücksichtigt und verwertet und gehandhabt werden.

12. Verfahren nach einem der Ansprüche 5 bis 11, **dadurch gekennzeichnet, dass** die Selektion des Referenzwerts ferner in Abhängigkeit der Art des verwendeten Werkzeuges oder der Art des jeweiligen Be- oder Verarbeitungsprozesses erfolgt.

## Claims

1. System for the automated grinding and/or polishing of workpieces (2) using supporting additional means, which comprises:
at least one handling device (4), in particular a robot or industrial robot, with at least one measuring arrangement (8) for detecting at least one control variable (9),
at least one regulating device (10) which interacts with at least the measuring arrangement (8) and, taking into account the at least one control variable, brings about an optimization of the respective grinding or polishing process, wherein
forces and/or moments and/or force deviations and/or moment deviations relative to at least one predetermined reference value occurring along at least one axis and/or at least one predeterminable direction can be detected, and the optimization of the respective grinding or polishing process is effected by correction of a predetermined movement sequence and thus by a path and position correction of the handling device (4), and
at least one control device (14) for controlling the position and movement of the handling device (4), which interacts with the at least one regulating device (10) in such a way that corresponding control correction values, in particular movement or position correction values, with respect to a predetermined movement sequence or path course are transmitted or can be transmitted to the control device (14) for implementation of a respectively performed position or path optimization, and the
at least one regulating device (10), in cooperation with the control device (14) and the at least one measuring arrangement (8), regulates the force acting along at least one predeterminable direction or the torque acting along at least one direction to at least one predetermined reference value, wherein
a respectively suitable reference value is selected from a predeterminable set of reference values, which are stored in a retrievable manner in particular in a data memory, by means of the regulating device as a function of predeterminable parameters which comprise the current position of the tool and of the workpiece, **characterized in that** a specific reference value of the control variable is assigned to each additional means.

2. System according to claim 1, **characterized in that** at a distal end of the handling device (4) a holding device (12) for receiving at least one tool (6) or at least one workpiece (2) is provided.

3. System according to one of the preceding claims, **characterized in that** the forces and torques acting in at least one predeterminable direction between the inserted tool (6) and the respective workpiece (2), in particular support and/or contact forces, are taken into account and utilized as the regulated variable (9) detected by the measuring arrangement (8).

4. System according to one of the preceding claims, **characterized in that** at least one interface for wired or wireless communication and for data exchange is provided in each case between regulating device (10) and/or measuring arrangement (8) and/or control device (14).

5. Method for the automated grinding and/or polishing of workpieces using supporting additional means, **characterized in that**
at least one control variable (9) is detected by means of at least one measuring arrangement (8) of a handling device (4) and an optimization of the respective grinding or polishing process is carried out by means of at least one regulating device (10), taking into account the at least one control variable, wherein
the optimization of the respective grinding or polishing process is effected by carrying out a correction of a predetermined, in particular programmed, movement sequence and thus a path and position correction of the handling device (4) based on the determined control variable (9),
wherein corresponding control correction values, in particular movement and/or position correction values, are determined on the basis of the measured control variable values detected and are transmitted to a control device (14) of the handling device (4) for implementation in order to carry out a corresponding position and/or path optimization, and the force acting along at least one predeterminable direction or the torque acting along at least one direction is regulated to at least one predetermined reference value, wherein
depending on the current position of the tool and the workpiece, a suitable reference value is selected from a predeterminable set of reference values and used as the basis for the optimization process, whereby each additional means is assigned a specific reference value of the control variable.

6. Method according to claim 5, **characterized in that** a force and torque determination or force and torque difference determination is carried out by means of at least one measuring arrangement (8), the forces and/or torques acting in at least one predeterminable direction between the respective tool (6) used and the respective workpiece (2) being taken into account as the control variable (9).

7. Method according to one of claims 5 to 6, **characterized in that** the forces or moments occurring and acting along at least one freely predeterminable direction and/or at least one axis between the tool (6) and the workpiece (2) are recorded in absolute terms by means of a measuring arrangement (8).

8. Method according to one of claims 5 to 7, **characterized in that** measured control variable values are transmitted to the control device (10).

9. Method according to one of claims 5 to 8, **characterized in that** six possible degrees of rotational freedom of the handling device (4) are taken into account and utilized.

10. Method according to one of claims 5 to 9, **characterized in that** at least one piezoelectric sensor or a force transducer or a differential pressure gauge is used as a force and moment sensor in at least one measuring arrangement (8).

11. Method according to one of claims 5 to 10, **characterized in that** complex shapes and material transitions and/or different materials of the workpieces (2) are also taken into account and utilized and handled.

12. Method according to one of claims 5 to 11, **characterized in that** the selection of the reference value is also carried out as a function of the type of tool used or the type of the respective machining or processing process.

## Revendications

1. Système de rectification et/ou de polissage automatisé de pièces ouvrées (2) en utilisant des moyens auxiliaires d'assistance, lequel possède :
au moins un dispositif de manipulation (4), notamment un robot ou un robot industriel, comprenant au moins un arrangement de mesure (8) destiné à acquérir au moins une grandeur de régulation (9),
au moins un appareil de régulation (10) qui coopère au moins avec l'arrangement de mesure (8) et qui, en tenant compte de l'au moins une grandeur de régulation, provoque une optimisation du processus de rectification ou de polissage respectif,
les forces et/ou les moments et/ou les écarts de force et/ou de moment qui se produisent le long d'au moins un axe et/ou d'au moins une direction qui peut être prédéfinie pouvant être acquis par rapport à au moins une valeur de référence prédéterminée, et l'optimisation du processus de rectification ou de polissage respectif étant produite par correction d'un déroulement de mouvement prédéfini et ainsi par une correction de trajectoire et de position du dispositif de manipulation (4), et
au moins un appareil de commande (14) destiné à la commande de position et de mouvement du dispositif de manipulation (4), lequel coopère avec l'au moins un appareil de régulation (10) de telle sorte que des valeurs de correction de commande, notamment des valeurs de correction de mouvement ou de position, correspondant à une optimisation de position ou de trajectoire respectivement effectuée et concernant un déroulement du mouvement ou un tracé de la trajectoire, sont communiquées ou peuvent être communiquées à l'appareil de commande (14) en vue de la mise en oeuvre et
au moins un appareil de régulation (10), en coopération avec l'appareil de commande (14) et l'au moins un arrangement de mesure (8), régule la force qui agit le long d'au moins une direction pouvant être prédéterminée ou le moment qui agit le long d'au moins une direction à au moins une valeur de référence prédéterminée,
une valeur de référence respectivement appropriée étant sélectionnée parmi un ensemble pouvant être prédéterminé de valeurs de référence, lesquelles sont notamment stockées dans une mémoire de données de manière à pouvoir être appelées, au moyen de l'appareil de régulation en fonction de paramètres pouvant être prédéfinis qui comprennent la position actuelle de l'outil et de la pièce ouvrée, **caractérisé en ce qu'**une valeur de référence spécifique de la grandeur de régulation est attribuée à chaque moyen supplémentaire.

2. Système selon la revendication 1, **caractérisé en ce qu'**un dispositif de maintien (12) est présent à une extrémité distale du dispositif de manipulation (4) pour recevoir au moins un outil (6) ou au moins une pièce ouvrée (2).

3. Système selon l'une des revendications précédentes, **caractérisé en ce que** les grandeurs de régulation (9) acquises par l'arrangement de mesure (8) sont les forces et les moments, notamment les forces d'appui et/ou de pression, qui agissent dans au moins une direction pouvant être prédéterminée entre l'outil (6) utilisé et la pièce ouvrée (2) respective.

4. Système selon l'une des revendications précédentes, **caractérisé en ce qu'**au moins une interface est respectivement présente pour la communication filaire ou sans fil et pour l'échange de données entre l'appareil de régulation (10) et/ou l'arrangement de mesure (8) et/ou l'appareil de commande (14).

5. Procédé de rectification et/ou de polissage automatisé de pièces ouvrées en utilisant des moyens auxiliaires d'assistance, **caractérisé en ce que**
au moins une grandeur de régulation (9) est acquise au moyen d'au moins un arrangement de mesure (8) d'un dispositif de manipulation (4) et une optimisation du processus de rectification ou de polissage respectif est effectuée au moyen d'au moins un appareil de régulation (10) en tenant compte de l'au moins une grandeur de régulation,
l'optimisation du processus de rectification ou de polissage respectif étant provoquée en effectuant, sur la base de la grandeur de régulation (9) déterminée, une correction d'un déroulement de mouvement prédéfini, notamment programmé, et ainsi une correction de trajectoire et de position du dispositif de manipulation (4),
des valeurs de correction de commande correspondantes, notamment des valeurs de correction de mouvement et/ou de position, étant déterminées à l'aide des valeurs de mesure de grandeurs de régulation acquises, puis transmises à un appareil de commande (14) du dispositif de manipulation (4) en vue de la mise en oeuvre d'une optimisation de position et/ou de trajectoire correspondante, et la force qui agit le long d'au moins une direction pouvant être prédéterminée ou le moment qui agit le long d'au moins une direction étant régulé sur au moins une valeur de référence prédéterminée,
en fonction de la position actuelle de l'outil et de la pièce ouvrée, une valeur de référence respectivement appropriée étant sélectionnée parmi un ensemble pouvant être prédéterminé de valeurs de référence et étant utilisée comme base du processus d'optimisation, une valeur de référence spécifique de la grandeur de régulation étant attribuée à chaque moyen supplémentaire.

6. Procédé selon la revendication 5, **caractérisé en ce qu'**une détermination de force et de moment ou une détermination de différence de force et de moment est effectuée au moyen d'au moins un arrangement de mesure (8), les forces et/ou les moments qui agissent dans au moins une direction pouvant être prédéterminée entre l'outil (6) respectivement utilisé et la pièce ouvrée (2) respective étant pris en compte comme grandeur de régulation (9).

7. Procédé selon l'une des revendications 5 à 6, **caractérisé en ce que** les forces ou les moments qui se produisent et qui agissent le long d'au moins une direction qui peut être prédéfinie librement et/ou d'au moins un axe entre l'outil (6) et la pièce ouvrée (2) sont acquises qualitativement de manière absolue au moyen d'un arrangement de mesure (8).

8. Procédé selon l'une des revendications 5 à 7, **caractérisé en ce que** des valeurs de mesure de grandeur de régulation acquises sont communiquées à l'appareil de régulation (10).

9. Procédé selon l'une des revendications 5 à 8, **caractérisé en ce que** six degrés de liberté de rotation possibles du dispositif de manipulation (4) sont pris en compte et exploités.

10. Procédé selon l'une des revendications 5 à 9, **caractérisé en ce qu'**au moins un capteur piézoélectrique ou un capteur de force ou une cellule de mesure de pression différentielle est utilisé comme capteur de force et de moment dans au moins un arrangement de mesure (8) .

11. Procédé selon l'une des revendications 5 à 10, **caractérisé en ce que** des mises en forme et des transitions de matériaux complexes et/ou des matériaux différents des pièces ouvrées (2) sont également pris en compte et exploités et manipulés.

12. Procédé selon l'une des revendications 5 à 11, **caractérisé en ce que** la sélection de la valeur de référence s'effectue en outre en fonction du type de l'outil utilisé ou du type de processus de traitement ou de transformation respectif.
